# EUROPEAN PATENT APPLICATION

(11) **EP 4 760 438 A1**
(43) Date of publication of application: **17.06.2026**
(21) Application number: 25207908.2
(22) Date of filing: 10.10.2025
(51) Int. Cl.: G05D 1/435, B65G 1/00, G05D 1/693

(54) **METHOD AND APPARATUS FOR ROBOT PATH PLANNING, STORAGE MEDIUM, AND PROGRAM PRODUCT**

(30) Priority: 10.12.2024 CN 202411815964
(71) Applicant: Hai Robotics Co., Ltd., Shenzhen, Guangdong 518000 (CN)
(72) Inventor: KUANG, Chengzhen, Shenzhen, Guangdong, 518000 (CN)
(74) Representative: Gulde & Partner

(57) **Abstract**

A method for robot path planning includes: generating (S201, S901) a target path when a target storage location of a target robot is located at an upper level of a rack, where the target path includes a first path from a current position of the target robot to a waiting point and a second path from the waiting point to the target storage location; generating (S202), if a blocking robot exists, an avoidance path for the blocking robot based on a state of the blocking robot; and controlling (S203, S909) the target robot to move to the waiting point along the first path, before, during, or after controlling the blocking robot to move along the avoidance path, and controlling (S910) the target robot to reach the target storage location along the second path during or after controlling the blocking robot to move along the avoidance path.

## Description

This application claims priority to Chinese patent application No. 202411815964.1, filed on December 10, 2024.

### TECHNICAL FIELD

The present disclosure relates to the field of intelligent warehousing technologies, and in particular, to a method and an apparatus for robot path planning, , a storage medium, and a program product.

### BACKGROUND OF THE INVENTION

An intelligent warehousing system relies on a large number of robots to implement efficient operation of goods. Non-conflicting shortest paths need to be planned for the robots in order that the robots operate more safely and more efficiently.

Commonly used path trajectory algorithms include a heuristic search algorithm, a Dijkstra algorithm, a conflict-based search (CBS) algorithm, and the like. However, such path trajectory algorithms are developed for the movement of a robot on the ground, and cannot be applied to a robot that needs to climb up to a rack and operate at a certain height.

### SUMMARY OF THE INVENTION

The present disclosure provides a method and apparatus for robot path planning, a device, a storage medium, and a program product, to plan a non-conflicting path for a robot that needs to climb up to a rack and operate at a certain height, i.e., a robot that needs to reach a target storage location on an upper level of a rack, thereby improving smoothness and safety of walking of the robot.

According to a first aspect, the present disclosure provides a method for robot path planning, including:
generating a target path when a target storage location of a target robot is located at an upper level of a rack, where the target path includes a first path from a current position of the target robot to a waiting point and a second path from the waiting point to the target storage location, the current position of the target robot is located on ground or is located on a rail on a column different from a column where the target storage location is located, a distance between the waiting point and a climbing-up point corresponding to the target storage location is less than a preset distance, and the target robot is configured to climb up along rails on left and right sides of the column where the target storage location is located;
generating, if a blocking robot exists, an avoidance path for the blocking robot based on a state of the blocking robot, where the blocking robot is a robot that blocks the target robot from moving to the target storage location along the target path; and
controlling the target robot to move to the waiting point along the first path, and controlling the target robot to reach the target storage location along the second path during or after controlling the blocking robot to move along the avoidance path.

In a possible embodiment, the generating an avoidance path for the blocking robot based on a state of the blocking robot includes:
determining, if the blocking robot is in an idle state, whether an upward avoidance rail segment available for the blocking robot exists on a target rail, where the upward avoidance rail segment is higher than the target storage location, and the target rail is a rail where the blocking robot is located; and
generating, if the upward avoidance rail segment exists, an avoidance path from a current position of the blocking robot to the upward avoidance rail segment.

In a possible embodiment, the method further includes:
generating, if no upward avoidance rail segment available for the blocking robot exists on the target rail, an avoidance path from the current position of the blocking robot to a target ground point, where the target ground point is located on ground and is not located on the path from the current position of the target robot to the climbing-up point.

In a possible embodiment, the controlling the target robot to reach the target storage location along the second path during or after controlling the blocking robot to move along the avoidance path includes:
controlling the target robot to reach the target storage location along the second path after controlling the blocking robot to move to the target ground point along the avoidance path.

In a possible embodiment, if a plurality of blocking robots exist on the rail where the blocking robot is located, and the plurality of blocking robots are all in the idle state, the determining whether an upward avoidance rail segment available for the blocking robot exists on a target rail includes:
determining, if a length of an unoccupied rail segment above the target storage location on the target rail is sufficient to accommodate the plurality of blocking robots, that an upward avoidance rail segment available for the plurality of blocking robots exists on the target rail.

In a possible embodiment, the method further includes:
determining, if the length of the unoccupied rail segment above the target storage location on the target rail is insufficient to accommodate the plurality of blocking robots, at least one first blocking robot and at least one second blocking robot from the plurality of blocking robots based on the length of the unoccupied rail segment above the target storage location on the target rail;
generating an upward avoidance path for the at least one first blocking robot, where the upward avoidance path is an avoidance path from a current position of the first blocking robot to the rail segment higher than the target storage location; and
generating a downward avoidance path for the at least one second blocking robot, where the downward avoidance path is an avoidance path from a current position of the second blocking robot to a target ground point, and the target ground point is located on ground and is not located on the path from the current position of the target robot to the climbing-up point.

In a possible embodiment, the determining whether an upward avoidance rail segment available for the blocking robot exists on a target rail includes:
determining, if no other robot exists above the blocking robot in the target rail, that an upward avoidance rail segment available for the blocking robot exists on the target rail.

In a possible embodiment, the generating an avoidance path for the blocking robot based on a state of the blocking robot includes:
generating, if the blocking robot is in an operating state, an avoidance path from a current position of the blocking robot to a target ground point, where the target ground point is located on ground and is not located on the path from the current position of the target robot to the waiting point.

In a possible embodiment, the generating, if the blocking robot is in an operating state, an avoidance path from a current position of the blocking robot to a target ground point includes:
generating, if the blocking robot is in the operating state and the blocking robot needs to return to ground after completing an operation, the avoidance path from the current position of the blocking robot to the target ground point.

In a possible embodiment, the generating an avoidance path for the blocking robot based on a state of the blocking robot includes:
determining, if the blocking robot is in an operating state and has no more tasks to be executed after completing an operation, whether an upward avoidance rail segment available for the blocking robot exists on a target rail, where the upward avoidance rail segment is higher than the target storage location, and the target rail is a rail where the blocking robot is located; and
generating, if the upward avoidance rail segment exists, an avoidance path from a current position of the blocking robot to the upward avoidance rail segment, so that the blocking robot moves upward to the upward avoidance rail segment along the avoidance path after completing the operation.

In a possible embodiment, the method further includes:
controlling, if no blocking robot exists, the target robot to reach the target storage location along the target path.

According to a second aspect, the present disclosure provides an apparatus for robot path planning, including:
a path planning module, configured to generate a target path when a target storage location of a target robot is located at an upper level of a rack, where the target path includes a first path from a current position of the target robot to a waiting point, and a second path from the waiting point to the target storage location, the current position of the target robot is located on ground or is located on a rail on a column different from a column where the target storage location is located, and a distance between the waiting point and a climbing-up point corresponding to the target storage location is less than a preset distance, and the target robot climbs up along rails on left and right sides of the column where the target storage location is located;
an avoidance path planning module, configured to generate, if a blocking robot exists, an avoidance path for the blocking robot based on a state of the blocking robot, where the blocking robot is a robot that blocks the target robot from moving to the target storage location along the target path; and
a movement control module, configured to control the target robot to move to the waiting point along the first path, and control the target robot to reach the target storage location along the second path during or after controlling the blocking robot to move along the avoidance path.

According to a third aspect, the present disclosure provides an electronic device, including: a processor, and a memory communicatively connected to the processor.

The memory is configured to store computer-executable instructions.

The processor is configured to execute the computer-executable instructions stored in the memory, to implement the method provided in the first aspect.

According to a fourth aspect, the present disclosure provides a computer-readable storage medium. The computer-readable storage medium stores computer-executable instructions. The computer-executable instruction, when executed by a processor, causes the processor to implement the method provided in the first aspect.

According to a fifth aspect, the present disclosure provides a computer program product. The computer program product includes a computer program. The computer program, when executed by a processor, causes the processor to implement the method provided in the first aspect.

According to the method and apparatus for robot path planning, the device, the storage medium, and the program product provided in the present disclosure, a target path is generated for a target robot, which is a robot that needs to reach a target storage location located on an upper level of a rack. The target path includes a first path from a current position of the target robot to a waiting point on the rack and a second path from the waiting point on the rack to the target storage location. When a blocking robot exists, i.e., when there is a robot that blocks the target robot from moving from the current position to the target storage location, a procedure of planning an avoidance path for the blocking robot is triggered. Specifically, an avoidance path is planned for the blocking robot according to a state of the blocking robot, such as an operation status or a location of the blocking robot. The target robot is controlled to move to the waiting point along the first path, before, during, or after controlling the blocking robot to move along the planned avoidance path. The target robot is controlled to reach the target storage location along the second path during or after controlling the blocking robot to move along the planned avoidance path. Therefore, the robot is prevented from being interlocked due to a path conflict during movement which otherwise affects operation efficiency of the robot. The avoidance strategy designed for the blocking robot ensures smooth operation of the target robot, and improves efficiency of upper-level operation of the target robot.

### BRIEF DESCRIPTION OF DRAWINGS

The accompanying drawings, which are incorporated herein and constitute a part of this specification, illustrate embodiments consistent with the present disclosure and, together with the specification, serve to explain the principles of the present disclosure.
FIG. 1 is a diagram of an application scenario according to an embodiment of the present disclosure;
FIG. 2 is a schematic flowchart 1 of a method for robot path planning according to an embodiment of the present disclosure;
FIG. 3 is a schematic diagram of positions of a climbing-up point and a waiting point according to an embodiment of the present disclosure;
FIG. 4 is a schematic diagram of a blocking robot according to an embodiment of the present disclosure;
FIG. 5 is a schematic flowchart 2 of a method for robot path planning according to an embodiment of the present disclosure;
FIG. 6 is a schematic diagram of an upward avoidance path for a blocking robot according to an embodiment of the present disclosure;
FIG. 7 is a schematic diagram of avoidance paths for a plurality of blocking robots according to an embodiment of the present disclosure;
FIG. 8 is a schematic flowchart 3 of a method for robot path planning according to an embodiment of the present disclosure;
FIG. 9 is a schematic flowchart 4 of a method for robot path planning according to an embodiment of the present disclosure;
FIG. 10 is a schematic structural diagram of an apparatus for robot path planning according to an embodiment of the present disclosure; and
FIG. 11 is a schematic structural diagram of an electronic device according to an embodiment of the present disclosure.

The foregoing accompanying drawings have shown specific embodiments of the present disclosure, which will be described in further detail below. These accompanying drawings and literal descriptions are not intended to limit the scope of the idea of the present disclosure in any manner, but are provided for the purpose of describing the concept of the present disclosure for a person skilled in the art with reference to particular embodiments.

### DETAILED DESCRIPTION

Exemplary embodiments are described in detail herein, and examples of the exemplary embodiments are shown in the accompanying drawings. When the following descriptions relate to the accompanying drawings, unless indicated otherwise, same numerals in different accompanying drawings represent same or similar elements. Implementations described in the following exemplary embodiments do not represent all implementations consistent with the present disclosure. Instead, the implementations are merely examples of an apparatus and a method that are described in detail in the appended claims and that are consistent with some aspects of the present disclosure.

In some intelligent warehousing systems, to improve space utilization and flexibility, a rack is provided with a rail for a robot to climb up, and the robot climbs up along the rail to flexibly retrieve goods from or deposit goods to an upper-level storage location. Conventional path trajectory algorithms (for example, a heuristic search algorithm, a Dijkstra algorithm, a CBS algorithm, and the like) are usually applied only to a robot walking on ground, and to plan a path without spatial and temporal conflicts for the robot. These algorithms cannot be directly used to plan a path for a robot climbing up along the rail.

To resolve the foregoing problem, for a robot that needs to climb up along a rail of a rack during operation, embodiments of the present disclosure provide a method for robot path planning, to plan a non-conflicting operation path for the robot. Specifically, when a target robot needs to move to a rack and operate at a certain height, primary path planning is performed to plan a target path for the target robot. The target path is a path from a current position of the target robot to a waiting point on the rack on which the target robot climbs up, and then from the waiting point to a target storage location. Then, when a blocking robot exists (for example, a blocking robot exists in a part of the path along which the target robot climbs up on the rack), a procedure of planning an avoidance path for the blocking robot is triggered. A proper avoidance path is planned for the blocking robot according to a state of the blocking robot, so that avoidance is performed at a lowest cost. On the premise that there is no conflict (for example, during or after avoidance by the blocking robot), the target robot is controlled at an appropriate timing to move to the target storage location along the planned target path. Therefore, a non-conflicting climbing-up path can be planned for the robot, thereby improving the operation efficiency of the robot.

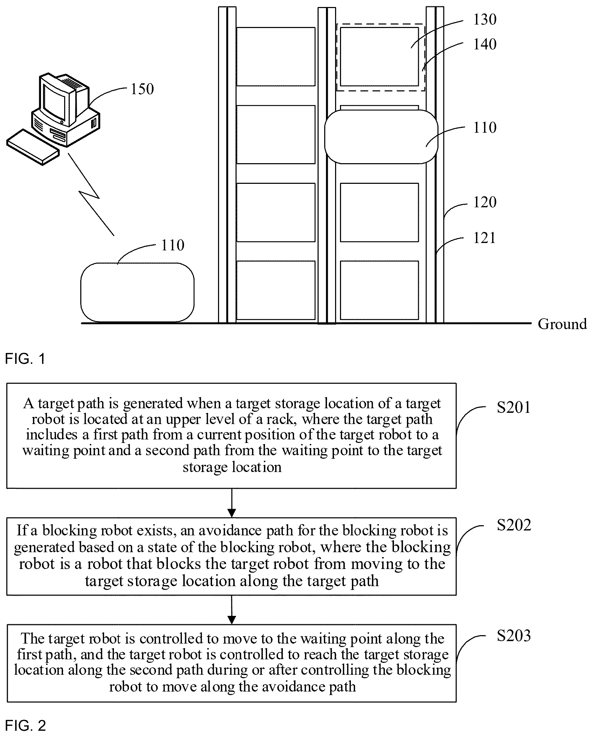

FIG. 1 is a diagram of an application scenario according to an embodiment of the present disclosure. As shown in FIG. 1, the method for robot path planning provided in the embodiments of the present disclosure is for a robot that executes a warehousing task in a warehousing system, and the robot needs to climb up on a rack during task execution. The warehousing task may include a retrieval task, an inbound task, an inventory check task, an inspection task, or the like. A rack 120 in the warehousing system is usually provided with multiple columns of storage locations used for container storage (only two columns are shown in FIG. 1). A rail 121 is shared between two adjacent columns of storage locations. A robot 110 needs to use two adjacent rails 121 during climbing up. A column of storage locations includes a plurality of levels of storage locations distributed along a height direction. FIG. 1 shows an example where each column of storage locations has four levels. In some other embodiments, the columns of storage locations in the warehousing system may have the same or different numbers of levels of storage locations.

When a storage location allocated by a scheduling device 150 of the warehousing system to the robot 110 for the warehousing task is an upper-level storage location, for example, a top-level storage location 140 in FIG. 1, the robot 110 needs to climb up to the storage location 140 along the rails 121, and then perform a corresponding task, for example, retrieves a container 130 stored in the storage location 140.

During operation of the robot 110, the method for robot path planning provided in the embodiments of the present disclosure may be used to plan a path for the robot 110 and control the robot to walk along the planned path, to resolve a problem of path conflict during climbing of the robot.

It should be noted that FIG. 1 is merely exemplary, and specific positions, forms, quantities, and the like of the robot 110, the rack 120, the rail 121, the scheduling device 150 in the warehousing system are not limited in the present disclosure.

The technical solutions of the present disclosure and how the technical solutions of the present disclosure resolve the foregoing technical problems are described in detail by using specific embodiments. The following specific embodiments may be combined with each other, and same or similar concepts or processes may not be repeatedly described in some embodiments. The following describes the embodiments of the present disclosure with reference to the accompanying drawings.

FIG. 2 is a schematic flowchart 1 of a method for robot path planning according to an embodiment of the present disclosure. The method provided in this embodiment may be performed by the scheduling device 150, or may be performed by another device of the warehousing system, for example, a device specifically configured for path planning. As shown in FIG. 2, the method for robot path planning in this embodiment may include the following steps.

Step S201: A target path is generated when a target storage location of a target robot is located at an upper level of a rack, where the target path includes a first path from a current position of the target robot to a waiting point and a second path from the waiting point to the target storage location.

When the current position of the target robot is located on ground or is located on a rail on a column different from a column where the target storage location is located, i.e., when the target robot is not located on the rail of the column where the target storage location on the rack is located, the target robot walks to the waiting point on ground, and then walks from the waiting point to the target storage location. A distance between the waiting point and a climbing-up point corresponding to the target storage location is less than a preset distance. The target robot climbs up along rails on left and right sides of the column where the target storage location is located. One rail is shared between two adjacent columns of storage locations. It should be noted that when the target robot is currently located on the rail of the column where the target storage location is located, the target robot only needs to move vertically on the rail of the column to reach the target storage location.

The target storage location is a storage location corresponding to a task assigned to the robot during operation of the robot. The robot is configured to retrieve the container from or deposit the container to the target storage location.

The robot is a transport apparatus for transporting the container. The robot may include a pallet, a pick-up and placement assembly, a climbing-up assembly, a mobile chassis, and the like. The pallet, the pick-up and placement assembly, and the climbing-up assembly are all mounted on the mobile chassis. The pallet is configured for placing the container, and may be a horizontal flat panel. The pick-up and placement assembly is configured to move the container placed on the pallet out of the pallet, or place the container onto the pallet. In an embodiment, the pick-up and placement assembly is configured to push the container onto the rack from the pallet, or to pull the container onto the pallet from the rack. In some other embodiments, the pick-up and placement assembly may lift the container upwards, and place the container onto the pallet or the rack. The climbing-up assembly is configured to enable the robot to climb up along the rail of the rack. The mobile chassis is configured to provide power for the robot to move in a horizontal plane, and may be a wheeled chassis, a tracked chassis, or the like.

An upper-level storage location of the rack is a storage location at a height greater than a preset value in the warehousing system. The preset value may be a height value greater than or equal to a default height. The default height may be a height of a storage location from or to which the target robot can retrieve or deposit goods when the target robot is located on ground. For example, the preset value may be a sum of the default height and a configurable height. Alternatively, a storage location on any level other than the first level (the lowest level) may be considered as a storage location on an upper level of the rack.

The climbing-up point corresponding to the target storage location is a point on the ground which corresponds to the column where the target storage location is located and at which the robot is engaged with the rack. At the climbing-up point, the target robot may be engaged with the rail along which the target robot is to climb up. For example, the climbing-up assembly of the target robot is connected to the rails on the left and right sides of the column where the target storage location is located.

The waiting point is a point on the ground. When a blocking robot exists, the target robot cannot directly climb up on the rack, but needs to wait at the waiting point, until the blocking robot completes avoidance. In an embodiment, the preset distance between the waiting point and the climbing-up point should be set so as not to block a robot operating on the column where the target storage location is located or an adjacent column thereof, from returning to the ground from an upper level of the rack. The preset distance may be set based on parameters such as a size of the storage location or a safety distance for movement of the robot.

The waiting point may be a fixed location point, for example, a location point at a certain distance from a left side of the rack where the target storage location is located. The waiting point may also be a non-fixed location point, for example, any location point distant from the climbing-up point corresponding to the target storage location by less than the preset distance.

One climbing-up point may correspond to plurality of waiting points. During generation of the target path, the waiting point of the target robot is selected according to an actual operation situation. For example, a waiting point that does not conflict with other robots is selected according to paths of the other robots.

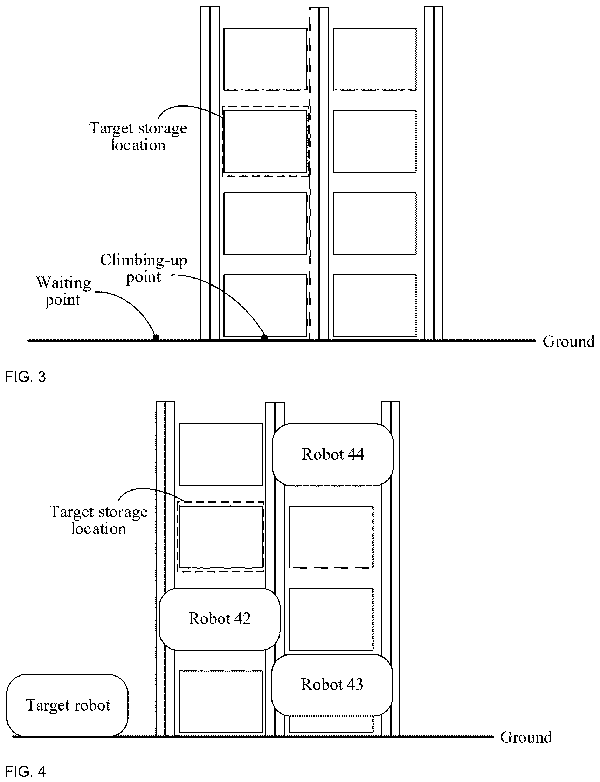

For example, FIG. 3 is a schematic diagram of positions of a climbing-up point and a waiting point according to an embodiment of the present disclosure. As shown in FIG. 3, the climbing-up point may be a midpoint between rails on two sides of the column where the target storage location is located, and the waiting point is located on a side of the climbing-up point. At the climbing-up point, the climbing-up assembly of the target robot is connected to the rails on the two sides of the column where the target storage location is located. The target robot can climb up after successfully connecting to the rails. The distance between the waiting point and the climbing-up point is relatively small and is less than the preset distance. Therefore, upon receiving an indication indicating that the target robot is allowed to climb up, the target robot can quickly move from the waiting point to the climbing-up point and climb up along the rails.

The target robot climbs up along the rails on left and right sides of the column where the target storage location is located. Specifically, the target robot climbs up along the rails on the left and right sides of the column where the target storage location is located in a height increasing direction. It should be noted that the column where the target storage location is located shares a rail with an adjacent column thereof, to improve the closeness of storage locations.

Specifically, when the target robot needs to climb up to the target storage location at the upper level of the rack along the rail in order to execute a task, a target path from the current position of the target robot to the target storage location is planned for the target robot. The target path includes a first path from the current position of the target robot to a waiting point, and a second path from the waiting point to the target storage location. The first path is a path on ground. The second path includes a path on ground from the waiting point to the climbing-up point and a climbing-up path from the climbing-up point to the target storage location.

When the current position of the target robot is located on ground, a specific implementation of planning the first path may be using any path search method, such as a Dijkstra algorithm, a heuristic search algorithm, a multi-agent path search algorithm, and a CBS algorithm, and the like, to generate the first path along which the target robot moves on the ground. Specifically, an obstacle in an environment such as a rack or another robot, and a movement path of the obstacle are obtained, and an environment model is constructed. Then, a path from the current position of the target robot to the waiting point, i.e., the first path, is generated based on the environment model and the path search method. Alternatively, the first path along which the target robot moves on the ground may be generated by using a local navigation method. Specifically, first, a shortest path from the current position of the target robot to the waiting point is generated. Then, ambient environment information of the target robot is obtained by using a sensor, a camera, or the like deployed on the target robot, and an obstacle such as a rack or another robot is avoided during movement. After the obstacle is avoided, a shortest path from the current position of the target robot to the waiting point is re-generated. The process is repeated, until the waiting point is reached. It should be noted that a specific implementation of planning the first path is not limited in the present disclosure.

In some embodiments, if the current position of the target robot is located on ground, when the target storage location of the target robot is located at the upper level of the rack, the first path from the current position of the target robot to the waiting point and the second path from the waiting point to the target storage location are generated. **If** the current position of the target robot is not located on ground and is not located on the column of the rack where the target storage location is located, the target robot may be first controlled to descend to a position on ground, and the position on ground is used as the current position of the target robot to plan the target path, i.e., generate the first path and the second path.

When the target robot is currently located on the column of the rack where the target storage location is located, a path from the current position of the target robot to the target storage location may be directly generated, for the target robot to climb up to or descend to the target storage location from the current position.

Step S202: If a blocking robot exists, an avoidance path for the blocking robot is generated based on a state of the blocking robot.

The blocking robot is a robot that blocks the target robot from moving to the target storage location along the target path.

There may be one or more blocking robots. The blocking robot may be a robot of the same type as the target robot, or may be a robot of a type different from that of the target robot.

When the blocking robot is located on the rail of the rack, if the target robot is currently located on ground, the blocking robot is specifically a robot that is located on the column where the target storage location is located and whose position is lower than the target storage location, or the blocking robot is a robot that is located on an adjacent column and whose position is lower than the target storage location, where the adjacent column is a column adjacent to the column where the target storage location is located.

If the target robot is currently located on a rail corresponding to a column other than the column where the target storage location is located, the blocking robot includes: (1) a robot that is located on the column where the target storage location is located and whose position is lower than the target storage location, or a robot that is located on an adjacent column and whose position is lower than the target storage location, where the adjacent column is a column adjacent to the column where the target storage location is located; and (2) a robot that is located on the column where the current position of the target robot is located and whose position is lower than the current position of the target robot, or a robot that is located on an adjacent column and whose position is lower than the current position of the target robot, where the adjacent column is a column adjacent to the column where the target storage location is located.

A state of a robot (including the blocking robot) may include an operation status of the robot. The operation status may include an idle state, an operating state, a locked state, and a fault state. The state of the robot may further include the current position of the robot.

Specifically, for each target robot currently located on ground, a target time point at which the target robot will reach the waiting point may be predicted. A robot, which is located on the column where the target storage location is located or an adjacent column thereof and whose position is lower than the target storage location after the target time point, is considered as a blocking robot of the target robot. For each target robot currently located on the rail of the rack and on a column different from the column where the target storage location is located, a robot that is located on the column where the target robot is currently located or an adjacent column thereof and whose position is lower than the current position of the target robot may be first considered as a blocking robot (i.e., a blocking robot corresponding to the current position). The blocking robot corresponding to the current position descends from its current position to ground to avoid the target robot. Then, a target time point at which the target robot will reach the waiting point is predicted. A robot, which is located on the column where the target storage location is located or an adjacent column thereof and whose position is lower than the target storage location after the target time point, is considered as a blocking robot of the target robot (i.e., a blocking robot corresponding to the target storage location). During or after the blocking robot corresponding to the target storage location avoiding the target robot, the target robot moves from the waiting point to the target storage location through the climbing-up point.

For example, FIG. 4 is a schematic diagram of a blocking robot according to an embodiment of the present disclosure. As shown in FIG. 4, it is assumed that there are a plurality of robots shown in FIG. 4 on the rack when the target robot climbs up along the second path of the planned target path. A robot 42 is located on the column where the target storage location is located, and the position of the robot is lower than the target storage location. It can be seen that the robot 42 blocks the target robot from climbing up to the target storage location, so the robot 42 is a blocking robot. A robot 43 and a robot 44 are both located on a column adjacent to the column where the target storage location is located, where the robot 43 is located at a position lower than the target storage location, and the robot 44 is located at a position higher than the target storage location. It can be known from FIG. 4 that, the robot 43 occupies a rail along which the target robot climbs up, and blocks the target robot from climbing up to the target storage location. Therefore, the robot 43 is also a blocking robot. As the robot 44 is located at a higher position than the target storage location, the robot 44 does not block the target robot on the premise that it does not descend to the target storage location. Therefore, the robot 44 is not a blocking robot.

In Step S202, it is determined whether a blocking robot exists. If a blocking robot exists, a state of the blocking robot is obtained. If no blocking robot exists, the target robot is directly controlled to travel along the planned target path.

When a blocking robot exists, if the blocking robot is in an idle state, after the avoidance path for the blocking robot is generated, the blocking robot is controlled to avoid along the avoidance path. If the blocking robot is in an operating state, an avoidance path for the blocking robot is generated, and after the blocking robot completes an operation or an operation of the blocking robot is suspended, the blocking robot is controlled to avoid along the avoidance path.

The avoidance path for the blocking robot may be an upward avoidance path or a downward avoidance path. The upward avoidance path is an avoidance path from the current position of the blocking robot to a higher position. The downward avoidance path is an avoidance path from the current position of the blocking robot to a target ground point. The upward avoidance path may be preferentially selected, to reduce the waiting time of the target robot.

Specifically, if an upward avoidance rail segment available for the blocking robot exists above the target storage location, an avoidance path, along which the blocking robot moves from the current position of the blocking robot to a position higher than the target storage location by a safety height, is generated. The safety height is used to protect the target robot from colliding with a blocking robot when climbing up to the target storage location.

The downward avoidance path includes a path from the current position of the blocking robot to a climbing-up point on a column where the blocking robot is located, and from the climbing-up point to a target ground point. To ensure that the final position of the blocking robot, i.e., the target ground point, does not affect climbing of the target robot. A point not located on the target path of the target robot should be chosen as the target ground point. In addition, considering costs of movement of the blocking robot, the downward avoidance path for the blocking robot should be as short as possible.

In some embodiments, when the target robot is currently located at an upper level of the rack, and a blocking robot exists below the column where the current position of the target robot is located or an adjacent column thereof, a similar method may be used to generate an avoidance path for the blocking robot, i.e., an avoidance path for the blocking robot is generated based on the state of the blocking robot. For example, when the target storage location and the current position of the target robot are located on different columns, the blocking robot below the column where the target robot is currently located or an adjacent column thereof is controlled to move down along the avoidance path to the target ground point, and then the target robot is controlled to move down the rack to ground, and further move to the waiting point along the first path.

In some other embodiments, if the current position of the target robot and the target storage location are located on the same column, the target robot is located below the target storage location, and a blocking robot exists on a path from the current position of the target robot to the target storage location, an upward avoidance path for the blocking robot is generated, so that the blocking robot moves to a position above the target storage location. The target robot may move to the target storage location during or after movement of the blocking robot. If the current position of the target robot and the target storage location are located on the same column, the current position of the target robot is higher than the target storage location, and a blocking robot exists on a path from the current position of the target robot to the target storage location, a downward avoidance path for the blocking robot is generated, so that the blocking robot moves to a position below the target storage location, for example, moves to the ground. The target robot may move to the target storage location during or after movement of the blocking robot. In an embodiment, after the blocking robot avoids, the target robot, after completing an operation of picking up a container at the target storage location, descends to ground along the rack, and carries the container to a workstation.

It should be noted that when no blocking robot exists, no avoidance path needs to be generated, and the target robot directly moves to the target storage location along the generated target path.

Step S203: The target robot is controlled to move to the waiting point along the first path, and the target robot is controlled to reach the target storage location along the second path during or after controlling the blocking robot to move along the avoidance path.

Before, during, or after the blocking robot is controlled to move along the avoidance path, the target robot is controlled to move to the waiting point along the first path.

Timing for controlling the target robot to start to move from the current position of the target robot to the waiting point along the first path may be before, during, or after movement of the blocking robot along the avoidance path, as long as a collision between the blocking robot and the target robot is avoided.

To reduce a time for the target robot to wait for the blocking robot to avoid, the target robot may be controlled to move to the waiting point along the first path and wait at the waiting point before the blocking robot moves along the avoidance path.

When there are plurality of blocking robots needing to avoid downwards, the target robot may restrict or block movement paths for the blocking robots, resulting in congestion. In this case, the target robot may be controlled to move to the waiting point along the first path during or after movement of the blocking robot along the avoidance path.

The target robot is controlled to move from the waiting point to the climbing-up point along the second path, during or after movement of the blocking robot along the avoidance path. The climbing-up assembly of the target robot is connected to the rails at the climbing-up point, and then the target robot continues to climb up to the target storage location along the second path.

If the avoidance path for the blocking robot does not conflict with the second path for the target robot, the target robot may be controlled to reach the target storage location along the second path during controlling the blocking robot to move along the avoidance path. If the avoidance path for the blocking robot conflicts with the second path for the target robot, the target robot may be controlled to reach the target storage location along the second path after the movement of the blocking robot completes along the avoidance path is completed.

The avoidance path not conflicting with the second path means that the blocking robot moving along the avoidance path does not collide with the target robot moving along the second path. For example, the avoidance path does not overlap the second path, or the avoidance path overlaps the second path, but the blocking robot and the target robot pass through the overlapping part at different time points, so that the blocking robot does not collide with the target robot.

In some embodiments, to reduce the time for the target robot to wait for the blocking robot to avoid, when the avoidance path for the blocking robot conflicts with the second path for the target robot, the target robot is first controlled to walk a part of the second path during movement of the blocking robot along the avoidance path on the premise that the blocking robot and the target robot do not collide, and when the blocking robot moves to a position not blocking the target robot, the target robot is controlled to move to the target storage location along the remaining part of the target path. For example, when a blocking robot exists on a column adjacent to the column where the target storage location is located and the blocking robot avoids downwards, the target robot may be controlled to move from the waiting point to the climbing-up point and wait at the climbing-up point.

If the avoidance path for the blocking robot is an upward avoidance path, and the current position of the target robot is located on ground, the target robot may be controlled to move to the target storage location along the second path during controlling the blocking robot to move along the upward avoidance path, i.e., the avoidance action of the blocking robot does not affect movement of the target robot, and the target robot does not need to wait for the blocking robot to complete the avoidance action. **If** the avoidance path for the blocking robot is a downward avoidance path, the target robot may be controlled to reach the target storage location along the second path after movement of the blocking robot to ground along the avoidance path, because a climbing-up portion of the second path of the target path conflicts with the downward avoidance path.

According to the method for robot path planning provided in the embodiment of the present disclosure, a target path is generated for a target robot, which needs to reach a target storage location located on an upper level of a rack. The target path includes a first path from a current position of the target robot to a waiting point on the rack, and a second path from the waiting point on the rack to the target storage location. When a blocking robot exists, i.e., when there is a robot that blocks the target robot from moving from the current position to the target storage location, a procedure of planning an avoidance path for the blocking robot is triggered. Specifically, an avoidance path is planned for the blocking robot according to the current position of the target robot and a state of the blocking robot, such as an operation status or a location of the blocking robot, where, for example, the target robot is located on ground or is located on a rail on a column different from a column where the target storage location is located. The target robot is controlled to move to the waiting point along the first path, before, during, or after controlling the blocking robot to move along the planned avoidance path. The target robot is controlled to reach the target storage location along the second path during or after controlling the blocking robot to move along the planned avoidance path. Therefore, the target robot is prevented from being interlocked due to a path conflict with another robot during moving from the current position to the target storage location, which otherwise affects operation efficiency of the robot. The avoidance strategy designed for the blocking robot ensures smooth operation of the target robot, and improves efficiency of upper-level operation of the target robot. In addition, by considering multiple states of the target robot and the blocking robot, such as the operation statuses and the locations, accuracy and comprehensiveness of robot path planning can be improved, thereby avoiding ineffective operation caused by an incomplete scene analysis.

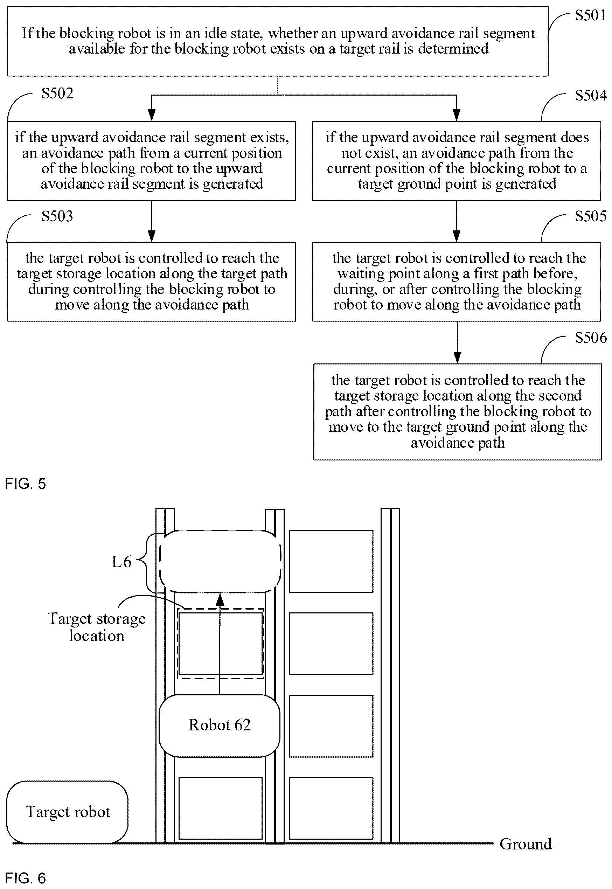

FIG. 5 is a schematic flowchart 2 of a method for robot path planning according to an embodiment of the present disclosure. In this embodiment, a blocking robot in an idle state is described. As shown in FIG. 5, after the target path of the target robot is generated, the method for robot path planning may further include the following steps to implement avoidance of the blocking robot and control of the movement of the target robot. The method shown in FIG. 5 includes the following steps.

Step S501: If the blocking robot is in an idle state, whether an upward avoidance rail segment available for the blocking robot exists on a target rail is determined. If the upward avoidance rail segment exists, step S502 is performed; or if the upward avoidance rail segment does not exist, step S504 is performed.

The upward avoidance rail segment is higher than the target storage location. The target rail is a rail where the blocking robot is located, for example, rails on two sides of the target storage location.

Whether an upward avoidance rail segment available for the blocking robot exits may be determined by determining whether the part of the target rail segment above the target storage location includes a sufficient idle rail segment.

In an embodiment, it is assumed that the quantity of blocking robots on the target rail is N, and N is a positive integer. If a length of an unoccupied rail segment in the part of the target rail above the target storage location is greater than N times a sum of a height of the blocking robot and a safety height, it indicates that the rail segment above the target storage location is sufficient to accommodate the N blocking robots, i.e., an upward avoidance rail segment available for the N blocking robots exists on the target rail segment.

For example, in a case where no robot exists in the part of the target rail above the target storage location, if a difference (i.e., a height difference) between a total height of the column where the target storage location is located and a height of the target storage location is greater than or equal to N times the sum of the height of the blocking robot and the safety height, it is determined that an upward avoidance rail segment available for the N blocking robots exists on the target rail segment.

In a case where M robots (M being a positive integer) exists in the part of the target rail above the target storage location, if a difference (i.e., a height difference) between a total height of the column where the target storage location is located and a height of the target storage location is greater than or equal to M+N times the sum of the height of the blocking robot and the safety height, it is determined that an upward avoidance rail segment available for the N blocking robots exists on the target rail segment.

Optionally, the determining whether an upward avoidance rail segment available for the blocking robot exists on a target rail includes:
determining, if no other robot exists above the blocking robot in the target rail, that an upward avoidance rail segment available for the blocking robot exists on the target rail. The term "other robot" herein is a robot other than the blocking robot.

When the target storage location is not a top-level storage location, if there is another robot above the blocking robot in the target rail, the another robot affects climbing up of the blocking robot. Therefore, when no other robot exists above the blocking robot, it can be directly determined that an upward avoidance rail segment available for the blocking robot exists on the target rail.

When there is another robot above the blocking robot in the target rail, whether an upward avoidance rail segment available for the blocking robot or for the blocking robot and the another robot exists on the target rail segment may be further determined according to a position of the another robot, a position of the target storage location, and an occupation status of the part of the target rail segment above the target storage location.

Specifically, whether the another robot is higher than the target storage location may be determined. If the another robot is higher than the target storage location, it is determined whether an upward avoidance rail segment available for the blocking robot exists on the part of the target rail from the target storage location to the position of the another robot. If such rail segment exists, it is determined that an upward avoidance rail segment available for the blocking robot exists on the target rail. If no such rail segment exists, it may be further determined whether an upward avoidance rail segment available for the blocking robot and the another robot exists in the part of the target rail segment above the target storage location. If yes, it is determined that an upward avoidance rail segment available for the blocking robot exists on the target rail. For example, a robot exists above the target storage location, and a blocking robot exists below the target storage location. A distance between the target storage location and the robot cannot accommodate the blocking robot, but a part of the rail above the target storage location can accommodate the robot and the robot. In this case, the robot moves upward on the rails, until a distance between the robot and the target storage location is sufficient to safely accommodate the blocking robot. Then, the blocking robot moves upward to avoid the target robot.

When no other robot exists above the blocking robot, it is determined that the blocking robot can avoid upwards. The avoidance logic is simple and efficient.

Optionally, if a plurality of blocking robots exist on the rail where the blocking robot is located, and the plurality of blocking robots are all in the idle state, the determining whether an upward avoidance rail segment available for the blocking robot exists on a target rail includes:
determining, if a length of an unoccupied rail segment above the target storage location on the target rail is sufficient to accommodate the plurality of blocking robots, that an upward avoidance rail segment available for the plurality of blocking robots exists on the rail.

Specifically, if a plurality of idle blocking robots exist on the target rail (i.e., the rail on two sides of the column where the target storage location is located or an adjacent column thereof), whether the length of the unoccupied rail segment above the target storage location on the target rail is sufficient to accommodate the plurality of blocking robots needs to be determined, so as to determine whether the plurality of blocking robots can avoid upward. For example, the length of the unoccupied rail segment is at least N(H+Δh), where N is the quantity of the blocking robots on the target rail, H is the height of the blocking robot, and Δh is the safety height, i.e., a minimum distance between blocking robots climbing up on the rack. If the length of the unoccupied rail segment above the target storage location on the target rail is insufficient to accommodate the plurality of blocking robots, for example, can accommodate only a subset of the plurality of blocking robots, e.g., n blocking robots (where n is a positive integer less than N), the plurality of blocking robots may be classified into two categories, where the blocking robots of a first category are n blocking robots at higher positions, and the blocking robots of a second category are the remaining blocking robots. An avoidance path for the blocking robot of the first category is an upward avoidance path, and an avoidance path for the blocking robot of the second category is a downward avoidance path.

If a blocking robot in the operating state exists among the plurality of blocking robots, the plurality of blocking robots may be classified into two categories, where the blocking robots of a first category are blocking robots that are higher than the highest blocking robot in the operating state, and the blocking robots of a second category are the blocking robot in the operating state and blocking robots that are lower than the blocking robot in the operating state. Whether the length of the unoccupied rail segment above the target storage location on the target rail is sufficient to accommodate the blocking robots of the first category may be determined. If yes, an upward avoidance path from the current position to the upward avoidance rail segment is generated for the blocking robots of the first category. A downward avoidance path from the current position to a target ground point may be generated for the blocking robots of the second category.

It is assumed that the quantity of the blocking robots of the first category is N1, where N1 is a positive integer greater than 1. **If** the length of the unoccupied rail segment above the target storage location on the target rail is insufficient to accommodate the blocking robots of the first category, for example, can accommodate only a subset of the blocking robots of the first category, e.g., n1 blocking robots of the first category, the blocking robots of the first category may be further classified into two categories, such as a first sub-category and a second sub-category, where the blocking robots of the first sub-category are n1 blocking robots at higher positions, and the blocking robots of the second sub-category are the remaining blocking robots of the first category. An avoidance path for the blocking robot of the first sub-category is an upward avoidance path, and an avoidance path for the blocking robot of the second sub-category is a downward avoidance path.

According to the upward avoidance strategy for the plurality of blocking robots, upward avoidance is preferentially implemented on the premise that there is sufficient idle rail segment on the target rail, so as to reduce the waiting time of the target robot and ensure safety of upward avoidance.

Step S502: An avoidance path from a current position of the blocking robot to the upward avoidance rail segment is generated.

Specifically, if the upward avoidance rail segment available for the blocking robot exists, indicating that the blocking robot can avoid upwards, an upward avoidance path for the blocking robot, i.e., an avoidance path from the current position of the blocking robot to the upward avoidance rail segment, is generated.

For example, FIG. 6 is a schematic diagram of an upward avoidance path for a blocking robot according to an embodiment of the present disclosure. As shown in FIG. 6, it is assumed that a blocking robot 62 is in an idle state, and an upward avoidance rail segment available for the blocking robot 62, e.g., a rail segment L6, exists above the target storage location and on the rail where the blocking robot 62 is located. In this case, the upward avoidance path for the blocking robot 62 is a path indicated by an arrow in FIG. 6. The upward avoidance path allows the blocking robot 62 to climb up from the current position to the rail segment L6, thereby implementing avoidance for the target robot 61.

If an upward avoidance rail segment available for a plurality of blocking robots exists, indicating that all the plurality of blocking robots can avoid upwards, an upward avoidance path for each blocking robot is generated, and the blocking robots are controlled in descending order of heights to climb up along the respective downward avoidance paths.

Step S503: The target robot is controlled to reach the target storage location along the target path during controlling the blocking robot to move along the avoidance path.

When all blocking robots on the target rail avoid upwards, the target robot may move to the waiting point along the first path before or during upward avoidance of the blocking robot, and reach the target storage location along the second path during upward avoidance of the blocking robot along the avoidance path, because the target path does not conflict with the upward avoidance path.

Step S504: An avoidance path from the current position of the blocking robot to a target ground point is generated.

The target ground point is located on ground and is not located on a path from the current position of the target robot to a climbing-up point.

Specifically, if no upward avoidance rail segment available for the blocking robot exists on the target rail, indicating that the blocking robot cannot avoid upwards and needs to avoid downwards, an avoidance path from the current position of the blocking robot to the target ground point is generated.

When a plurality of blocking robots need to avoid downwards, the blocking robots are sequentially controlled in descending order of heights to move to corresponding target ground points along the respective downward avoidance paths.

If a blocking robot that avoids downwards (i.e., a blocking robot for which the avoidance path is a downward avoidance path) exists among the plurality of blocking robots, e.g., some blocking robots avoid upwards and the other blocking robots avoid downwards, or all the blocking robots avoid downwards, the target robot is controlled to move to the target storage location along the second path of the target path, only after the blocking robots that avoid downwards have descended to the corresponding target ground points. To improve the avoidance efficiency, the plurality of blocking robots may concurrently perform avoidance along their respective avoidance paths without collision.

Step S505: The target robot is controlled to reach the waiting point along the first path before, during, or after controlling the blocking robot to move along the avoidance path.

Step S506: The target robot is controlled to reach the target storage location along the second path after controlling the blocking robot to move to the target ground point along the avoidance path.

When there is a blocking robot avoiding downwards, the target robot is controlled to climb up only after the blocking robot has moved to ground along the avoidance path, because the downward avoidance path conflicts with the second path of the target path for the target robot. To improve safety, the target robot may be controlled to reach the target storage location along the second path after the blocking robot moves to the target ground point.

The target robot may be first controlled to move to the waiting point on ground along the first path. Before or after the target robot reaches the waiting point, the blocking robot may be controlled to move to the target ground point along the avoidance path, and then the target robot is controlled to climb up to the target storage location along the second path.

In this embodiment, an optimal avoidance strategy for an idle blocking robot in different scenarios is achieved. First, upward avoidance is preferentially implemented by determining whether an upward avoidance rail segment exists, to reduce the waiting time for the target robot to perform avoidance, and reduce the walking distance of the blocking robot during avoidance, thereby lowering the costs of avoidance. When upward avoidance is not allowed, downward avoidance is implemented. As such, a problem of path conflict during climbing is effectively resolved, allowing the target robot to reach the target storage location smoothly and improving the operation efficiency of the robot.

Optionally, when a plurality of blocking robots exist on the target rail and the length of the unoccupied rail segment above the target storage location on the target rail is insufficient to accommodate the plurality of blocking robots, the method further includes:
determining at least one first blocking robot and at least one second blocking robot from the plurality of blocking robots, based on the length of the unoccupied rail segment above the target storage location on the target rail; generating an upward avoidance path for the at least one first blocking robot, where the upward avoidance path is an avoidance path from a current position of the first blocking robot to the rail segment higher than the target storage location; and generating a downward avoidance path for the at least one second blocking robot, where the downward avoidance path is an avoidance path from a current position of the second blocking robot to a target ground point, and the target ground point is located on ground and is not located on the path from the current position of the target robot to the climbing-up point.

The plurality of blocking robots on the target rail are classified into two categories: a first blocking robot and a second blocking robot. The first blocking robot is a robot that avoids upwards, the second blocking robot is a robot that avoids downwards, and the first blocking robot is higher than the second blocking robot.

Specifically, if the length of the unoccupied rail segment above the target storage location on the target rail is insufficient to accommodate the plurality of blocking robots, a quantity K of first blocking robots is determined based on the length of the unoccupied rail segment above the target storage location on the target rail. The first K higher blocking robots are determined as the first blocking robots, and the remaining blocking robots are determined as the second blocking robots. K is a positive integer.

Assuming that the length of the unoccupied rail segment above the target storage location on the target rail is I, a calculation formula for K may be: floor(I/(H+Δh)), where floor() is a round-down function, H is the height of the blocking robot, and Δh is the safety height.

After the avoidance paths for the first blocking robots and the second blocking robots are generated, the first blocking robots and the second blocking robots are controlled to perform avoidance along the respective avoidance paths. At the same time, the target robot is controlled to move along the first path. After the second blocking robots move to the respective target ground points, the target robot is controlled to move to the target storage location along the second path.

In some embodiments, the target robot may also move along the first path before the first blocking robots and the second blocking robots perform avoidance along the respective avoidance paths.

In the case of a plurality of blocking robots, proper upward or downward avoidance paths are determined for different blocking robots, to resolve path conflicts and reduce movement costs of the blocking robots due to avoidance and the time for the target robot to wait for the blocking robots to avoid.

For movement control of the target robot and the blocking robots, the target robot may be first controlled to reach the waiting point along the first path, and after the at least one second blocking robot is controlled to move to the target ground point along the downward avoidance path, the target robot is controlled to reach the target storage location along the second path. The first blocking robot may be controlled to avoid along the upward avoidance path at any time point during a period after the generation of the upward avoidance path for the first blocking robot and before collision of the first blocking robot with the target robot moving along the second path.

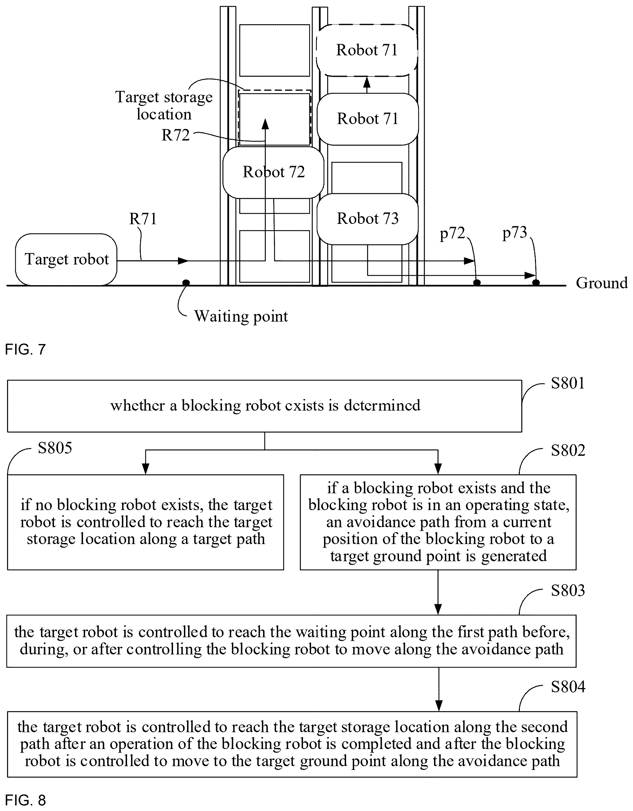

FIG. 7 is a schematic diagram of avoidance paths for a plurality of blocking robots according to an embodiment of the present disclosure. As shown in FIG. 7, only one upward avoidance rail segment available for one blocking robot exists in the part of the target rail above the target storage location. The blocking robot 71 is at the highest position among the blocking robots 71 to 73. Therefore, the blocking robot 71 is determined as a first blocking robot, and the blocking robot 72 and the blocking robot 73 are determined as second blocking robots. By means of the avoidance paths, the blocking robot 71 is controlled to perform upward avoidance, and the blocking robot 72 and the blocking robot 73 are controlled to perform downward avoidance. The blocking robots are controlled to move along the respective avoidance paths during controlling the target robot to reach the waiting point along a first path R71. After the blocking robot 72 and the blocking robot 73 move to respective target ground points p72 and p73 along the avoidance paths, the target robot is controlled to move to the target storage location along a second path R72.

The blocking robot 72 and the blocking robot 73 may move along the respective avoidance paths at the same time; or, the blocking robot 73 at a lower height performs downward avoidance along the avoidance path earlier than the blocking robot 72 at a higher height.

The blocking robot that performs upward avoidance, i.e., the blocking robot 71, only needs to start upward avoidance along the avoidance path before the target robot reaches the current position of the blocking robot 71. For example, the blocking robot 71 may be controlled to perform upward avoidance while the target robot starts to move along the target path.

Based on an occupation status of the rail segment on the target rail, the plurality of blocking robots on the target rail are classified into a first blocking robot that performs upward avoidance and a second blocking robot that performs downward avoidance. Efficient and low-cost avoidance paths can be planned for the plurality of blocking robots, enabling the target robot to reach the target storage location as soon as possible, thereby improving the operation efficiency of the target robot.

FIG. 8 is a schematic flowchart 3 of a method for robot path planning according to an embodiment of the present disclosure. This embodiment describes a case in which a blocking robot is in an operating state and a case in which no blocking robot exists. As shown in FIG. 8, after the target path for the target robot is generated, the method for robot path planning may specifically include the following steps.

Step S801: Whether a blocking robot exists is determined. If a blocking robot exists, step S802 is performed; if no blocking robot exists, step S805 is performed.

Step S802: Ff the blocking robot is in the operating state, an avoidance path from a current position of the blocking robot to a target ground point is generated.

The target ground point is located on ground and is not located on a path from the current position of the target robot to a climbing-up point. The blocking robot in the operating state includes a robot that is executing an assigned task, for example, a robot that is picking up a container from a corresponding storage location or a robot that is placing a container at a corresponding storage location.

Specifically, if the blocking robot is in the operating state, a downward avoidance path for the blocking robot, i.e., a downward avoidance path from the current position of the blocking robot to the target ground point, is generated, because the blocking robot in the operating state usually needs to return to ground to continue the operation.

For example, the robot in the operating state is usually assigned with one of two types of tasks: a retrieval task or a deposition task. When the robot in the operating state is assigned with the retrieval task, the robot usually needs to return to the ground to carry goods to a workstation for picking, and therefore a downward avoidance path may be generated. When the robot in the operating state is assigned with the deposition task, a downward avoidance path may also be generated for the blocking robot to return to the ground after completing the deposition task, so as to execute a next task. It should be noted that in some other embodiments, an upward avoidance path may also be generated for a blocking robot that is executing the deposition task.

Optionally, the generating, if the blocking robot is in an operating state, an avoidance path from a current position of the blocking robot to a target ground point includes:
generating, if the blocking robot is in the operating state and the blocking robot needs to return to ground after completing an operation, the avoidance path from the current position of the blocking robot to the target ground point.

A case where the blocking robot needs to return to ground after completing an operation may be that the blocking robot needs to carry a container to a designated position such as a sorting table after picking up the container, or may be that the blocking robot has completed a task, and to reach a target storage location of a next task, the blocking robot needs to return from the current position to ground and then moves to the corresponding target storage location.

Specifically, to improve operation efficiency of the blocking robot, if the blocking robot is in the operating state and needs to return to ground after completing the operation, an avoidance path from the current position of the blocking robot to the target ground point is generated, thereby shortening an additional walking distance for the blocking robot caused by avoidance and solving the problem of path conflicts between the blocking robot and the target robot.

Based on a determination that the blocking robot needs to return to ground after completing the operation, a downward avoidance path is generated, so that the impact on the task execution of the blocking robot can be reduced while completing the task of the target robot, and at the same time the operation efficiency of both the target robot and the blocking robot is improved.

Optionally, if the blocking robot is in the operating state and has no more tasks to be executed after completing an operation, it is determined whether an upward avoidance rail segment available for the blocking robot exists on a target rail, where the upward avoidance rail segment is higher than the target storage location, and the target rail is a rail where the blocking robot is located; and if the upward avoidance rail segment exists, an avoidance path from a current position of the blocking robot to the upward avoidance rail segment is generated, so that the blocking robot moves upward to a corresponding rail segment along the avoidance path after completing the operation.

Specifically, if the blocking robot has no more tasks to be executed after completing the operation, upward avoidance is preferentially performed when it is determined that upward avoidance is allowed, thereby reducing the time for the target robot to wait for the blocking robot to perform avoidance. A specific way to determine whether upward avoidance is allowed may be specifically: determining whether an upward avoidance rail segment higher than the target storage location exists on the target rail where the blocking robot is located. If an upward avoidance rail segment higher than the target storage location exists, indicating that upward avoidance is allowed, an upward avoidance path is generated. After the operation of the blocking robot is completed or suspended, the blocking robot is controlled to climb up to a corresponding rail segment along the upward avoidance path.

For a manner of determining whether an upward avoidance rail segment exists on the target rail where the blocking robot is located, reference can be made to related steps provided in the foregoing embodiment, such as step S501, and the details will not be repeatedly described herein.

If no upward avoidance rail segment higher than the target storage location exists, the avoidance path from the current position of the blocking robot to the target ground point is generated.

For the blocking robot in the operating state, after the operation of the blocking robot is completed and the blocking robot has no more tasks to be executed, the blocking robot may be adjusted to an idle state. In this case, an avoidance strategy, such as upward avoidance or downward avoidance, of the blocking robot is determined by using the avoidance strategy of the blocking robot in the idle state provided in the foregoing embodiment.

For the blocking robot that has no more tasks to be executed after completing an operation, upward avoidance is preferentially performed based on a determination of whether an upward avoidance rail segment exists, thereby reducing the waiting time of the target robot for avoidance, improving operation efficiency of the target robot, and avoiding the undue occupation of ground space caused by downward avoidance of the blocking robot.

Step S803: The target robot is controlled to reach the waiting point along the first path before, during, or after controlling the blocking robot to move along the avoidance path.

Step S804: The target robot is controlled to reach the target storage location along the second path after an operation of the blocking robot is completed and after the blocking robot is controlled to move to the target ground point along the avoidance path.

After the operation of the blocking robot is completed, the blocking robot is controlled to move to the target ground point along the downward avoidance path. Because the downward avoidance path conflicts with the second path of the target path for the target robot, the target robot is controlled to climb up along the second path only after the blocking robot has moved to the target ground point along the downward avoidance path.

The target robot may be first controlled to move to the waiting point along the first path. Before, during or after the target robot reaches the waiting point, the blocking robot may be controlled to move to the target ground point along the avoidance path, and then the target robot is controlled to climb up to the target storage location along the second path.

In some embodiments, whether the operation of the blocking robot can be suspended may further be determined. Specifically, a priority of a task of the blocking robot and a priority of a task of the target robot may be compared. If the priority of the task of the target robot is higher, the operation of the blocking robot is suspended.

The priority of a task may be determined based on parameters such as a time limit and a level of the task. On the premise that the operation of the blocking robot is determined to be suspended, an upward avoidance path for the blocking robot may be generated, so that when the target robot completes the task corresponding to the target storage location and returns to ground, the blocking robot that performs upward avoidance is controlled to return to a previous storage location and continue the operation that is suspended, to complete the task of the blocking robot.

If the priority of the task of the blocking robot is higher, the blocking robot is controlled to perform avoidance along the avoidance path, such as upward avoidance path or downward avoidance path, after the operation of the blocking robot is completed.

If the blocking robot needs to return to ground after completing an operation, its avoidance path is a downward avoidance path; or if the blocking robot does not need to return to ground after completing an operation, its avoidance path is an upward avoidance path. If the blocking robot has no more tasks to be executed after completing an operation, or if a next task for the blocking robot is at a position above the target storage location on the column where the blocking robot is located, it is considered that the blocking robot does not need to return to ground.

Step S805: If no blocking robot exists, the target robot is controlled to reach the target storage location along the target path.

Specifically, if no blocking robot exists, indicating that there is no other blocking robot blocking movement of the target robot, the target robot is controlled to reach the target storage location along the target path.

In this embodiment, based on the characteristic that the robot in the operating state usually needs to return to ground, a downward avoidance path is planned for the blocking robot in the operating state, so as to avoid the target robot, reduce the additional walking distance of the blocking robot due to avoidance, and improve operation efficiency of both the target robot and the blocking robot. By determining whether a blocking robot exists, it is ensured that the target robot climbs up to the target storage location without a path conflict, thereby ensuring the safety and smoothness of climbing of the robot, and avoiding interlocking.

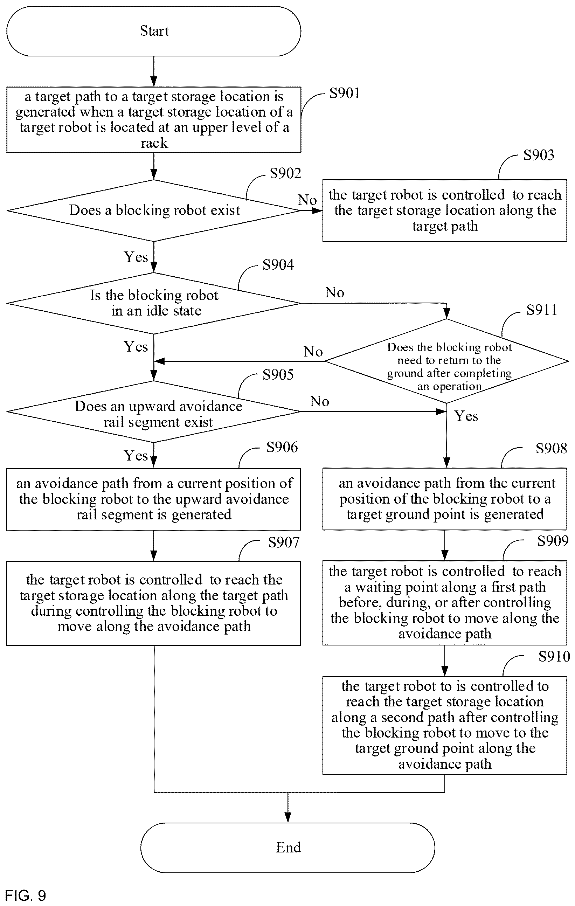

FIG. 9 is a schematic flowchart 4 of a method for robot path planning according to an embodiment of the present disclosure. This embodiment described a case in which there is one blocking robot. As shown in FIG. 9, to understand the method for robot path planning provided in this embodiment more clearly, this embodiment further describes a scenario of robot path planning.

Step S901: When the target storage location of a target robot is located at an upper level of a rack, a target path to the target storage location is generated.

Step S902: Whether a blocking robot exists is determined. If no, step S903 is performed; if yes, step S904 is performed.

Step S903: The target robot is controlled to reach the target storage location along the target path.

Step S904: It is determined whether the blocking robot is an idle state. If yes, step S905 is performed; if no, step S911 is performed.

Step S905: It is determined whether an upward avoidance rail segment available for the blocking robot exists on a target rail. **If** yes, step S906 is performed; if no, step S908 is performed.

Step S906:An avoidance path from a current position of the blocking robot to the upward avoidance rail segment is generated.

Step S907: The target robot is controlled to reach the target storage location along the target path during controlling the blocking robot to move along the avoidance path.

Step S908: The avoidance path from the current position of the blocking robot to a target ground point is generated.

Step S909: The target robot is controlled to reach a waiting point along the first path before, during, or after controlling the blocking robot to move along the avoidance path.

Step S910: The target robot is controlled to reach the target storage location along the second path after controlling the blocking robot to move to the target ground point along the avoidance path.

Step S911: It is determined whether the blocking robot needs to return to ground after completing an operation. If yes, step S908 is performed; if no, step S905 is performed.

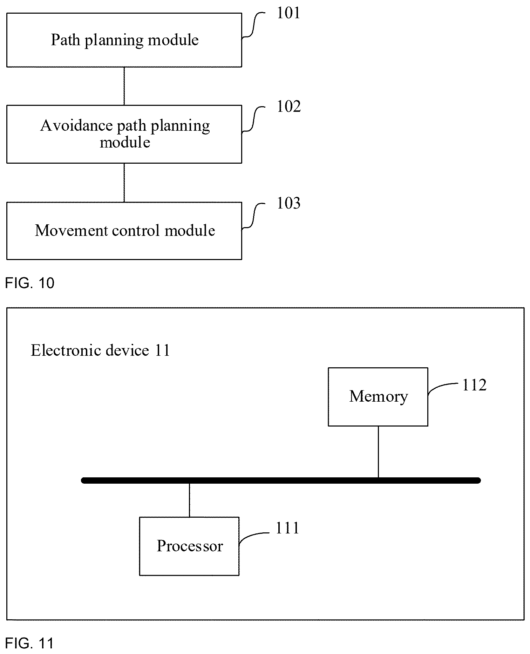

FIG. 10 is a schematic structural diagram of an apparatus for robot path planning according to an embodiment of the present disclosure. As shown in FIG. 10, the apparatus for robot path planning provided in this embodiment includes: a path planning module 101, an avoidance path planning module 102, and a movement control module 103.

The path planning module 101 is configured to generate a target path when a target storage location of a target robot is located at an upper level of a rack, where the target path includes a first path from a current position of the target robot to a waiting point, and a second path from the waiting point to the target storage location, the current position of the target robot is located on ground or is located on a rail on a column different from a column where the target storage location is located, and a distance between the waiting point and a climbing-up point corresponding to the target storage location is less than a preset distance, and the target robot is configured to climb up along rails on left and right sides of the column where the target storage location is located. The avoidance path planning module 102 is configured to generate, if a blocking robot exists, an avoidance path for the blocking robot based on a state of the blocking robot, where the blocking robot is a robot that blocks the target robot from moving to the target storage location along the target path. The movement control module 103 is configured to control the target robot to move to the waiting point along the first path (for example, control the target robot to move to the waiting point along the first path, before, during, or after controlling the blocking robot to move along the avoidance path), and control the target robot to reach the target storage location along the second path during or after controlling the blocking robot to move along the avoidance path.

Optionally, the avoidance path planning module 102 includes a rail segment determination unit and an avoidance path generation unit. The rail segment determination unit is configured to determine, when a blocking robot exists and the blocking robot is in an idle state, whether an upward avoidance rail segment available for the blocking robot exists on a target rail, where the upward avoidance rail segment is higher than the target storage location, and the target rail is a rail where the blocking robot is located. The avoidance path generation unit is configured to generate, if an upward avoidance rail segment available for the blocking robot exists on a target rail, an avoidance path from a current position of the blocking robot to the upward avoidance rail segment.

Optionally, the avoidance path generation unit is further configured to: generate, if no upward avoidance rail segment available for the blocking robot exists on the target rail, an avoidance path from the current position of the blocking robot to a target ground point, where the target ground point is located on ground and is not located on the path from the current position of the target robot to the climbing-up point.

Optionally, the rail segment determination unit is specifically configured to: determine, if a length of an unoccupied rail segment above the target storage location on the target rail is sufficient to accommodate the plurality of blocking robots, that an upward avoidance rail segment available for the plurality of blocking robots exists on the target rail.

Optionally, the rail segment determination unit is specifically configured to: determine, if no other robot exists above the blocking robot in the target rail, that an upward avoidance rail segment available for the blocking robot exists on the target rail.

Optionally, the avoidance path planning module 102 is specifically configured to: determine, if the length of the unoccupied rail segment above the target storage location on the target rail is insufficient to accommodate the plurality of blocking robots, at least one first blocking robot and at least one second blocking robot from the plurality of blocking robots, based on the length of the unoccupied rail segment above the target storage location on the target rail; generate an upward avoidance path for the at least one first blocking robot, where the upward avoidance path is an avoidance path from a current position of the first blocking robot to the rail segment higher than the target storage location; and generate a downward avoidance path for the at least one second blocking robot, where the downward avoidance path is an avoidance path from a current position of the second blocking robot to a target ground point, and the target ground point is located on ground and is not located on the path from the current position of the target robot to the climbing-up point.

Optionally, the avoidance path planning module 102 is specifically configured to: generate, if the blocking robot is in an operating state, an avoidance path from a current position of the blocking robot to a target ground point, where the target ground point is located on ground and is not located on the path from the current position of the target robot to the climbing-up point.

Optionally, the avoidance path planning module 102 is specifically configured to: generate, if the blocking robot is in the operating state and the blocking robot needs to return to ground after completing an operation, an avoidance path from a current position of the blocking robot to a target ground point.

Optionally, the avoidance path planning module 102 is specifically configured to: determine, if the blocking robot is in an operating state and has no more tasks to be executed after completing an operation, whether an upward avoidance rail segment available for the blocking robot exists on a target rail, where the upward avoidance rail segment is higher than the target storage location, and the target rail is a rail where the blocking robot is located; and generate, if the upward avoidance rail segment exists, an avoidance path from a current position of the blocking robot to the upward avoidance rail segment, so that the blocking robot moves upward to a corresponding rail segment along the avoidance path after completing the operation.

Optionally, the movement control module 103 is specifically configured to: control the target robot to reach the waiting point along the first path (for example, control the target robot to reach the waiting point along the first path before, during, or after controlling the blocking robot to move along the avoidance path); and control the target robot to reach the target storage location along the second path after controlling the blocking robot to move to the target ground point along the avoidance path.

Optionally, the apparatus for robot path planning further includes a no-blocking-robot module, configured to: control the target robot to reach the target storage location along the target path when no blocking robot exists.

The apparatus for robot path planning provided in this embodiment may perform the method provided in the foregoing method embodiment. The implementation principle and technical effect of the apparatus for robot path planning are similar to those in the foregoing method embodiment, and the details will not be repeatedly described in this embodiment.

FIG. 11 is a schematic structural diagram of an electronic device according to an embodiment of the present disclosure. As shown in FIG. 11, an electronic device 11 provided in this embodiment includes: a processor 111, and a memory 112 in communication connection with the processor 111. Optionally, the device 11 further includes a communication component, and the electronic device 11 communicates with a robot by using the communication component. The processor 111, the memory 112, and the communication component are connected by a bus.

In a specific implementation, the processor 111 executes a computer-executable instruction stored in the memory 112, so that the processor 111 performs the foregoing method.

For a specific implementation of the processor 111, reference can be made to the foregoing method embodiment. The implementation principle and technical effect of the processor 111 are similar to those in the foregoing method embodiment, and the details will not be repeatedly described in this embodiment.

In the foregoing embodiment, it should be understood that the processor may be a central processing unit (CPU), or may be another general-purpose processor, a digital signal processor (DSP), an application specific integrated circuit (ASIC), or the like. The general-purpose processor may be a microprocessor, or the processor may be any conventional processor, or the like. Steps of the methods disclosed with reference to the present disclosure may be directly performed by a hardware processor, or may be performed by using a combination of hardware and software modules in the processor.

The memory may include a random access memory (RAM), and may further include a non-volatile memory (NVM), for example, at least one magnetic disk memory.

The communication component of the electronic device 11 may send a radio signal (for example, a WiFi signal or a 4G/5G radio signal) to the robot, or may receive a radio signal sent by the robot.

The bus may be an industry standard architecture (ISA) bus, a peripheral component interconnect (PCI) bus, or an extended industry standard architecture (EISA) bus, or the like. The bus may include an address bus, a data bus, a control bus, and the like. For ease of representation, the bus in the accompanying drawings of the present disclosure is not limited to only one bus or one type of bus.

The present disclosure further provides a computer program product. The computer program product includes a computer program. The computer program, when executed by a processor, causes the processor to implement the foregoing method.

The present disclosure further provides a computer-readable storage medium. The computer-readable storage medium stores computer-executable instructions. The computer-executable instruction, when executed by a processor, cause the processor to implement the foregoing method.

The foregoing readable storage medium may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc. The readable storage medium may be any available medium that can be accessed by a general-purpose or special-purpose computer.

For example, the readable storage medium is coupled to the processor, so that the processor can read information from the readable storage medium and write information to the readable storage medium. Definitely, the readable storage medium may also be a component of the processor. The processor and the readable storage medium may be located in an application specific integrated circuit (ASIC). Definitely, the processor and the readable storage medium may exist in a device as discrete components.

The division of units is only a logical functional division, and there may be other ways of division in actual implementation. For example, a plurality of units or components may be combined or integrated into another system, or some features may be ignored or not performed. In addition, the mutual coupling or direct coupling or communication connection shown or discussed may be indirect coupling or communication connection through some interface, apparatus, or unit, which may be implemented in electronic, mechanical, or other forms.

The units described as separate components may or may not be physically separated, and the components shown as units may or may not be physical units, i.e., may be located in one position, or may be distributed on a plurality of network units. Some or all of the units may be selected according to actual needs to achieve the objectives of the embodiments.

In addition, the various functional units of the present disclosure may be integrated into one processing unit, or each of the units may physically exist separately, or two or more units are integrated into one unit.

If implemented in a form of a software functional unit and sold or used as an independent product, a function may be stored in a computer-readable storage medium. Based on such an understanding, the technical solutions of the present disclosure essentially, or the part contributing to the prior art, or part of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of the present disclosure. The storage medium includes: any medium that can store program code, such as a USB flash drive, a removable hard disk, a ROM, a random access memory (RAM), a magnetic disk, or an optical disc.

A person of ordinary skill in the art may understand that all or some of the steps of the foregoing method embodiments may be implemented by hardware related to program instructions. The foregoing program may be stored in a computer-readable storage medium. When the program is executed, steps of the foregoing method embodiments are performed. The foregoing storage medium includes: any medium that can store program code, such as a ROM, a RAM, a magnetic disk, or an optical disc.

Finally, it should be noted that, after considering the specification and practicing the present disclosure, a person skilled in the art would easily conceive of other embodiments of the present disclosure. The present disclosure is intended to cover any variation, use, or adaptive change of the present disclosure. These variations, uses, or adaptive changes follow the general principles of the present disclosure and include common general knowledge or common technical means in the art that are not disclosed in the present disclosure, and are not limited to the precise structures described above and shown in the accompanying drawings. Various modifications and changes can be made without departing from the scope of the present disclosure. The scope of the present disclosure is limited only by the appended claims.

## Claims

1. A method for robot path planning, comprising:
generating (S201, S901) a target path when a target storage location of a target robot is located at an upper level of a rack, wherein the target path comprises a first path from a current position of the target robot to a waiting point, and a second path from the waiting point to the target storage location, the current position of the target robot is located on ground or is located on a rail on a column different from a column where the target storage location is located, a distance between the waiting point and a climbing-up point corresponding to the target storage location is less than a preset distance, and the target robot is configured to climb up along rails on left and right sides of the column where the target storage location is located;
generating (S202), if a blocking robot exists, an avoidance path for the blocking robot based on a state of the blocking robot, wherein the blocking robot is a robot that blocks the target robot from moving to the target storage location along the target path; and
controlling (S203, S909) the target robot to move to the waiting point along the first path, and controlling (S910) the target robot to reach the target storage location along the second path during or after controlling the blocking robot to move along the avoidance path.

2. The method according to claim 1, wherein the generating an avoidance path for the blocking robot based on a state of the blocking robot comprises:
determining (S501, S905), if the blocking robot is in an idle state, whether an upward avoidance rail segment available for the blocking robot exists on a target rail, wherein the upward avoidance rail segment is higher than the target storage location, and the target rail is a rail where the blocking robot is located; and
generating (S502, S906), if the upward avoidance rail segment exists, an avoidance path from a current position of the blocking robot to the upward avoidance rail segment.

3. The method according to claim 2, wherein the method further comprises:
generating (S504), if no upward avoidance rail segment available for the blocking robot exists on the target rail, an avoidance path from the current position of the blocking robot to a target ground point, wherein the target ground point is located on ground and is not located on the path from the current position of the target robot to the climbing-up point.

4. The method according to claim 3, wherein the controlling (S203) the target robot to reach the target storage location along the second path during or after controlling the blocking robot to move along the avoidance path comprises:
controlling (S506) the target robot to reach the target storage location along the second path after controlling the blocking robot to move to the target ground point along the avoidance path.

5. The method according to claim 2, wherein a plurality of blocking robots exist on the rail where
the blocking robot is located, and the plurality of blocking robots are all in the idle state; and the determining (S501) whether the upward avoidance rail segment available for the blocking
robot exists on the target rail comprises:
determining, if a length of an unoccupied rail segment above the target storage location on the target rail is sufficient to accommodate the plurality of blocking robots, that an upward avoidance rail segment available for the plurality of blocking robots exists on the target rail.

6. The method according to claim 5, wherein the method further comprises:
determining, if the length of the unoccupied rail segment above the target storage location on the target rail is insufficient to accommodate the plurality of blocking robots, at least one first blocking robot and at least one second blocking robot from the plurality of blocking robots, based on the length of the unoccupied rail segment above the target storage location on the target rail;
generating an upward avoidance path for the at least one first blocking robot, wherein the upward avoidance path is an avoidance path from a current position of the first blocking robot to the rail segment higher than the target storage location; and
generating a downward avoidance path for the at least one second blocking robot, wherein the downward avoidance path is an avoidance path from a current position of the second blocking robot to a target ground point, and the target ground point is located on ground and is not located on the path from the current position of the target robot to the climbing-up point.

7. The method according to claim 2, wherein the determining whether the upward avoidance rail segment available for the blocking robot exists on the target rail comprises:
determining, if no other robot exists above the blocking robot in the target rail, that an upward avoidance rail segment available for the blocking robot exists on the target rail.

8. The method according to claim 1, wherein the generating the avoidance path for the blocking robot based on the state of the blocking robot comprises:
generating (S802, S908), if the blocking robot is in an operating state, an avoidance path from a current position of the blocking robot to a target ground point, wherein the target ground point is located on ground and is not located on the path from the current position of the target robot to the climbing-up point.

9. The method according to claim 1, wherein the generating the avoidance path for the blocking robot based on the state of the blocking robot comprises:
determining, if the blocking robot is in an operating state and has no more tasks to be executed after completing an operation, whether an upward avoidance rail segment available for the blocking robot exists on a target rail, wherein the upward avoidance rail segment is higher than the target storage location, and the target rail is a rail where the blocking robot is located; and
generating, if the upward avoidance rail segment exists, an avoidance path from a current position of the blocking robot to the upward avoidance rail segment, so that the blocking robot moves upward to the upward avoidance rail segment along the avoidance path after completing the operation.

10. The method according to any one of claims 1 to 9, wherein the method further comprises: controlling (S805, S903), if no blocking robot exists, the target robot to reach the target storage location along the target path.

11. An apparatus for robot path planning, comprising:
a path planning module (101), configured to generate a target path when a target storage location of a target robot is located at an upper level of a rack, wherein the target path comprises a first path from a current position of the target robot to a waiting point, and a second path from the waiting point to the target storage location, the current position of the target robot is located on ground or is located on a rail on a column different from a column where the target storage location is located, a distance between the waiting point and a climbing-up point corresponding to the target storage location is less than a preset distance, and the target robot is configured to climb up along rails on left and right sides of the column where the target storage location is located;
an avoidance path planning module (102), configured to generate, if a blocking robot exists, an avoidance path for the blocking robot based on a state of the blocking robot, wherein the blocking robot is a robot that blocks the target robot from moving to the target storage location along the target path; and
a movement control module (103), configured to control the target robot to move to the waiting point along the first path, and control the target robot to reach the target storage location along the second path during or after controlling the blocking robot to move along the avoidance path.

12. A computer-readable storage medium, storing computer-executable instructions therein, wherein the computer-executable instructions, when executed by a processor, cause the processor to implement the method according to any one of claims 1 to 10.

13. A computer program product, comprising a computer program, the computer program, when executed by a processor, causes the processor to implement the method according to any one of claims 1 to 10.
